# EUROPEAN PATENT APPLICATION

(11) **EP 4 427 642 A1**
(43) Date of publication of application: **11.09.2024**
(21) Application number: 24161332.2
(22) Date of filing: 05.03.2024
(51) Int. Cl.: A47J 27/21

(54) **A LIQUID HEATING CONTAINER**

(30) Priority: 08.03.2023 CN 202320427056 U
(71) Applicant: Zhejiang Shaoxing Supor Domestic Electrical Appliance Co., Ltd, Shaoxing, Zhejiang 312017 (CN)
(72) Inventor: LIU, Huaqing, Shaoxing (CN); SHU, Zaishan, Shaoxing (CN)
(74) Representative: LLR

(57) **Abstract**

The present application relates to a liquid heating container, comprising a container body formed with a liquid holding chamber, a top lid capable of covering the container body, a handle connected to the container body and the top lid, and a steam line, an end of which is capable of extending to the bottom of the container body and used for communicating with the exterior to discharge steam, wherein an end of the handle close to the top lid is provided with a steam switch comprising a steam chamber in communication with the liquid holding chamber and used for triggering the steam switch, the other end of the steam line being in communication with the steam chamber. Such a design helps reduce the temperature of steam when it is discharged, thereby reducing the possibility that a user is scalded by steam, which is beneficial for the utilization safety of the liquid heating container.

## Description

The present application relates to the technical field of home appliances, and in particular, to a liquid heating container.

As technology develops, electrical kettles are provided with a steam switch used for controlling their powering off, which can be triggered by steam produced after liquid is heated. Currently, after a steam switch is triggered, steam is generally discharged via a spout. Due to the high temperature of steam at this time, users are easily scalded by steam, which poses a safety hazard for the use of electric kettles.

To solve the problem that the temperature of steam discharged from a liquid heating container is high, the present application provides a liquid heating container.

Embodiments of the present application provide a liquid heating container, comprising a container body formed with a liquid holding chamber, a top lid capable of covering the container body, a handle connected to the container body and the top lid, and a steam line, an end of which is capable of extending to the bottom of the container body and used for communicating with the exterior to discharge steam, wherein an end of the handle close to the top lid is provided with a steam switch comprising a steam chamber in communication with the liquid holding chamber and used for triggering the steam switch, the other end of the steam line being in communication with the steam chamber.

By providing the steam line in communication with the steam chamber, steam in the steam chamber can be guided to the bottom of the container body. Thus, steam can be discharged from the bottom of the liquid heating container. During its course of flowing through the steam line, steam can have some time to cool down, thereby helping reduce its temperature when discharged and in turn reducing the possibility that a user is scalded by steam, which is beneficial for the utilization safety of the liquid heating container. Moreover, arranging the steam line inside the container body helps reduce the possibility that the steam line imposes limitations on the form and structure of the handle and helps reduce the possibility that a user is scalded when holding the handle, which further helps improve user experience.

In a possible mode of realization, the steam line is connected to a bottom wall of the steam chamber and extends in a direction of height of the liquid heating container.

Such a design helps reduce the volume taken up by the steam line inside the container body and helps save the volume of the container body, while facilitating the accommodation of liquid in the container body. On the other hand, such a design also helps reduce the length of the steam line and thus helps shorten the time for steam to cool down in the steam line, thereby helping reduce the possibility of producing condensate and in turn reduce the possibility of adverse effects of condensate on the liquid heating container.

In a possible mode of realization, a side wall of the steam chamber is provided with a steam passage comprising a first passage and a second passage, an end of the first passage being in communication with the steam chamber while the other end is in communication with the second passage, the second passage being used for communicating with the steam line, and an angle existing between the first passage and the second passage.

Providing the first passage and the second passage helps increase the length of the steam passage and thus helps lengthen the time for steam to pass through the steam passage, thereby enabling steam to cool down preliminarily inside the steam passage before entering the steam line, which further helps reduce the temperature of steam discharged from the liquid heating container, so as to reduce the possibility that a user is scalded by steam, in turn improving a user's utilization safety and experience.

In a possible mode of realization, the steam line is sleeved with the steam passage.

This design helps increase the stability and reliability of the connection between the steam passage and the steam line, reduce the possibility that the steam passage and the steam line detach from each other, and enable steam to stably enter the steam line via the steam passage, in turn facilitating the discharge of steam.

In a possible mode of realization, the top lid is provided with a connector, an end of which is connected to the steam line, and the other end of which is connected to the steam passage.

Providing the connector helps increase the stability and reliability of the connection between the steam line and the steam passage, while helping improve the sealing between the steam line and the steam passage and reducing the possibility that steam spills out from the connection between the steam line and the steam passage, which in turn helps improve the utilization safety of the liquid heating container.

In a possible mode of realization, the top lid is provided with an air inlet and an air guiding line, the air inlet being in communication with the liquid holding chamber, the top lid being formed with a first chamber in communication with the steam chamber, an end of the air guiding line being in communication with the air inlet, and the other end being in communication with the first chamber.

By providing the air guiding line, steam entering via the air inlet can be guided so as to enable steam to flow towards the first chamber from the air inlet and thereby enabling steam to smoothly enter the steam chamber to trigger the steam switch to achieve the powering off of the liquid heating container, which in turn helps improve the utilization safety of the liquid heating container.

In a possible mode of realization, the top lid is provided with at least two air inlets and at least two air guiding lines, the air inlets being in communication with the corresponding air guiding lines.

This arrangement helps increase the flow of steam, enables steam produced in the container body to rapidly flow towards the steam chamber so as to trigger the steam switch, and thereby helping shorten the time needed to trigger the steam switch, which in turn helps improve the utilization safety of the liquid heating container. Moreover, this arrangement also reduces the possibility of a large quantity of steam accumulating in the liquid holding chamber, which in turn helps reduce the possibility that steam poses a safety hazard for the liquid heating container.

In a possible mode of realization, the top lid is further provided with a communicating member, the communicating member being provided with a communication passage, an end of which is in communication with the steam chamber, and the other end of which is in communication with the first chamber.

By providing the communicating member, a passage is provided for steam to flow from the first chamber to the steam chamber, thereby helping achieve the flowing of steam towards the steam chamber and reduce the possibility of steam accumulating in the first chamber, which facilitates the triggering of the steam switch by steam and in turn helps improve the utilization safety of the liquid heating container.

In a possible mode of realization, the communication passage is located at the side of the steam passage of the steam chamber away from the steam line in the direction of the height of the container body.

This arrangement helps reduce the possibility of steam in the steam chamber flowing back to the communication passage and enable the steam in the steam chamber to smoothly flow into the steam line, and thereby helping steam be discharged from the liquid heating container, which in turn helps improve the utilization safety of the liquid heating container.

In a possible mode of realization, the liquid heating container further comprises a bottom lid located at the side of the container body away from the top lid, the bottom lid being formed with a second chamber, the steam line being capable of extending into the second chamber, the bottom lid being provided with an air outlet in communication with the second chamber.

This arrangement helps enable steam to be discharged from the liquid heating container via the air outlet and reduce the possibility of steam accumulating in the second chamber, thereby helping improve the utilization safety of the liquid heating container.

Embodiments of the present application provides a liquid heating container, comprising a container body formed with a liquid holding chamber, a top lid capable of covering the container body, a handle connected to the container body and the top lid, and a steam line, an end of which is capable of extending to the bottom of the container body and used for communicating with the exterior to discharge steam, wherein an end of the handle close to the top lid is provided with a steam switch comprising a steam chamber in communication with the liquid holding chamber and used for triggering the steam switch, the other end of the steam line being in communication with the steam chamber. This design helps lower the temperature of steam when it is discharged and thereby reducing the possibility that a user is scalded by steam, which is beneficial for the utilization safety of the liquid heating container.

It should be understood that the general description above and the detailed description in the following text are only illustrative and cannot limit the present application.

### Brief Description of the Drawings

Fig. 1 is a sectional view of a liquid heating container provided by the present application in a first embodiment;
Fig. 2 is a partial, schematic view of a liquid heating container provided by the present application in a first embodiment;
Fig. 3 is a sectional view of a liquid heating container provided by the present application in a second embodiment;
Fig. 4 is a partial, schematic view of a liquid heating container provided by the present application in a second embodiment;

### Reference numerals:

1 - container body;
   11 - liquid holding chamber;
   12 - heating member;
2 - top lid;
   21 - air inlet;
   22 - air guiding line;
   23 - first chamber;
   24 - communicating member;
      241 - communication passage;
   25 - connector;
3 - handle;
4 - steam switch;
   41 - steam chamber;
5 - steam passage;
   51 - first passage;
   52 - second passage;
6 - steam line;
7 - bottom lid;
   71 - second chamber;
8 - base.

The accompanying drawings here, which are incorporated into the specification and constitute a part thereof, illustrate embodiments in accordance with the present application and serve to explain the principles of the present application together with the specification.

### Detailed Description of the Embodiments

To better understand the technical solutions of the present application, embodiments of the present application are described below in detail in connection with the accompanying drawings.

It should be understood that the foregoing general description and the following detailed description are merely exemplary and cannot limit the present application.

It should be clear that the described embodiments are only some of the embodiments of the present application, rather than all of the embodiments. All other embodiments obtained by those of ordinary skill in the art based on the embodiments in the present application, without making creative efforts, fall within the scope of protection of the present application.

The terminology used in the embodiments of the present application is only for the purpose of describing particular embodiments and is not intended to limit the present application. As used in the embodiments and the appended claims, the singular forms "alan", "said" and "the" are intended to include the plural forms as well, unless the context clearly indicates otherwise.

It should be understood that the term "and/or" used herein is only an association relationship describing associated objects, indicating that there can be three relationships. For example, "A and/or B" means three situations: A alone exists, A and B exist simultaneously, and B alone exists. In addition, the symbol "/" herein generally indicates that the associated objects before and after it are in an "or" relationship.

It should be noted that directional words such as "upper," "lower," "left," and "right" used in the embodiments of the present application are described from the perspectives shown in the drawings and should not be understood as limiting the embodiments of the present application. Additionally, it should be understood in the context that when an element is referred to as being connected "above" or "below" another element, it not only can be directly connected "above" or "below" said another element, but also can be indirectly connected "above" or "below" said another element via an intermediate element.

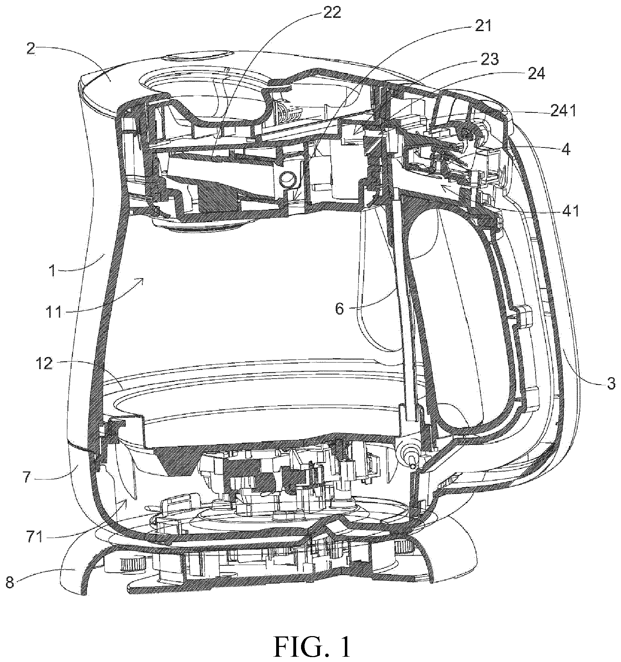

As shown in Fig. 1, an embodiment of the present application provides a liquid heating container, comprising a container body 1, a top lid 2, a handle 3, and a steam line 6. The container body 1 is formed with a liquid holding chamber 11. The top lid 2 is capable of covering the container body 1. The handle 3 is connected to the container body 1 and the top lid 2. An end of the steam line 6 is capable of extending to the bottom of the container body 1 and used for communicating with the exterior to discharge steam. An end of the handle 3 close to the top lid 2 is provided with a steam switch 4 comprising a steam chamber 41 in communication with the liquid holding chamber 11 and used for triggering the steam switch 4. The other end of the steam line 6 is in communication with the steam chamber 41.

Specifically, the liquid heating container can be an electric kettle. The liquid holding chamber 11 is used for accommodating liquid. The top lid 2 is capable of rotating relative to the container body 1, so as to open or close the container body 1. The container body 1 is provided with the handle 3 on one side, which facilitates holding and manipulation by a user. The steam switch 4 is mounted at an upper end of the handle 3. After the liquid heating container heats liquid in the liquid holding chamber 11 to a certain temperature, the liquid will produce steam, at which time the steam in the liquid holding chamber 11 can enter the steam chamber 41 and thus trigger the steam switch 4 so as to achieve the powering off of the liquid heating container and thus cause the liquid heating container to stop heating the liquid, which helps increase the liquid heating container's utilization safety. As the steam in the steam chamber 41 can enter the steam line 6, and an end of the steam line 6 can extend into the bottom of the container body 1 and communicate with the exterior, the steam can be discharged from the interior of the liquid heating container. Specifically, the steam line 6 can be a pipe made of stainless steel.

In the relevant art, steam in a steam chamber generally will be discharged via a spout or an air outlet on a kettle lid. As the spout or the air outlet on the kettle lid are close to the steam chamber, to be discharged from the liquid heating container, steam need only travel a short path after leaving the steam chamber. However, at this time the steam still has a high temperature. As a result, after being discharged, the steam can easily scald a user, causing a safety risk for the user, reducing the liquid heating container's utilization safety, and thus degrading user experience. On another hand, currently, a steam line is provided inside a handle. Therefore, both ends of the handle need to be connected to the kettle body so as to form a loop for steam to circulate in. Such a design poses a certain limitation on the structure and shape of the handle. In addition, when a user holds the handle, he or she can easily be scalded by heat diffused by the steam, which also affects the user's utilization safety.

Compared to the relevant art, by providing the steam line 6 in communication with the steam chamber 41, thereby enabling steam in the steam chamber 41 to be guided to the bottom of the container body 1, the steam can thus be discharged from the bottom of the liquid heating container. When flowing through the steam line 6, the steam can have a certain time to cool down, thereby helping reduce the temperature of the steam when discharged. Thus, the possibility of scalding a user is reduced, which helps increase the liquid heating container's utilization safety. In addition, arranging the steam line 6 inside the container body 1 helps reducing the possibility that the steam line 6 limits the shape and structure of the handle 3 and helps reduce the possibility that a user is scalded when holding the handle 3, which further helps improve user experience.

As shown in Fig. 1, in a possible mode of realization, the steam line 6 is connected to a bottom wall of the steam chamber 41 and extends in the direction of the height of the liquid heating container.

After the steam line 6 communicates with the steam chamber 41, the steam line 6 can extend smoothly along a side wall of the container body 1 towards the bottom of the container body 1. That is, the direction of extension of the steam line 6 can be substantially parallel to the direction of the height of the liquid heating container. Steam can leave the steam chamber 41 via the steam line 6 and flow towards the bottom of the container body 1 through the steam passage 5 so as to be discharged to the exterior. Specifically, the steam line 6 can be provided separately from the container body 1. Alternatively, it can be formed integrally with the side wall of the container body 1.

Such a design helps reduce the volume taken up by the steam line 6 inside the container body 1 and helps save the volume of the container body 1, while facilitating the accommodation of liquid in the container body 1. On the other hand, this design is also beneficial for reducing the length of steam line 6, which is conducive to shortening the cooling time of steam in the steam line 6, thereby reducing the possibility of producing condensate and in turn reducing the possibility of adverse effects of condensate on the liquid heating container.

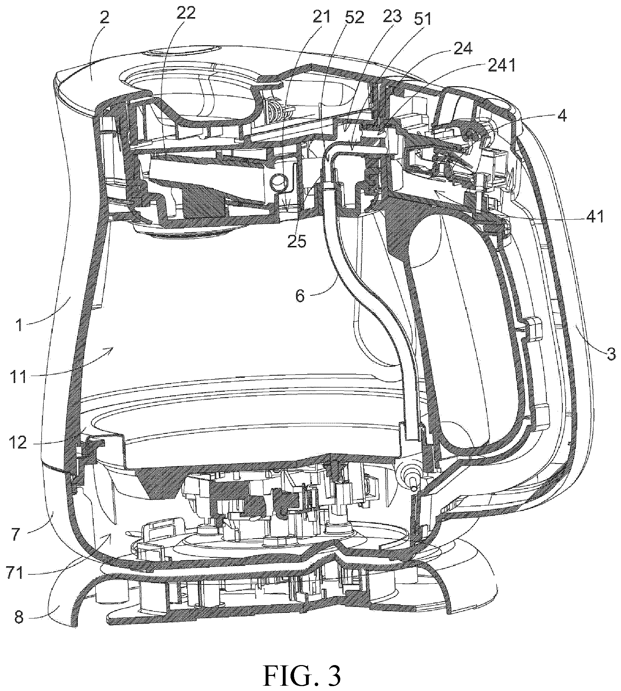

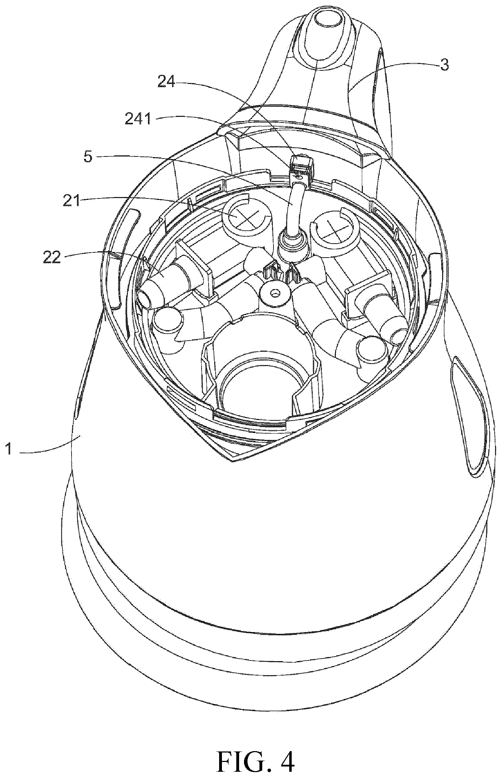

As shown in Figs. 3 and 4, in a possible mode of realization, a side wall of the steam chamber 41 is provided with a steam passage 5 comprising a first passage 51 and a second passage 52. An end of the first passage 51 is in communication with the steam chamber 41 while the other end is in communication with the second passage 52. The second passage 52 is used for communicating with the steam line 6, and an angle exists between the first passage 51 and the second passage 52.

The steam passage 5 can be arranged at the side of the steam chamber 41 close to the top lid 2. The steam passage 5 comprises the first passage 51 and the second passage 52. The first passage 51 and the second passage 52 are in communication with each other, and the angle between the two can be 90°. Specifically, the second passage 52 can be located inside the top lid 2 and the first passage 51 can extend to the interior of the top lid 2 to communicate with the second passage 52. Therefore, when steam flows into the steam passage 5 from the steam chamber 41, steam can first enter the interior of the top lid 2 via the steam passage 5, and then enter the steam line 6. That is, steam inside the steam chamber 41 will not directly flow towards the bottom of the container body 1. Instead, it will first return to the interior of the top lid 2 via the steam passage 5 before being discharged via the steam line 6. As the first passage 51 can extend away from the steam chamber 41 in a radial direction of the container body 1, after the steam line 6 is connected to the steam passage 5, there is a certain gap between steam line 6 and the side wall of container body 1, which reduces the possibility of contact between the steam line 6 and the container body 1, thereby conducive to reducing the potential impact of the steam line 6 on the structure of the container body 1 and in turn beneficial to improve the structural strength of the container body 1.

Providing the first passage 51 and the second passage 52 helps increase the length of the steam passage 5, that is, helps lengthen the time for steam to pass through the steam passage 5, thereby enabling steam to cool down preliminarily inside the steam passage 5 before entering the steam line 6, which further helps reduce the temperature of steam discharged from the liquid heating container, so as to reduce the possibility that a user is scalded by steam, thus improving a user's utilization safety and experience.

In a possible mode of realization, the steam line 6 is sleeved with the steam passage 5.

Specifically, an end of the steam passage 5 can extend into the steam line 6 and thereby achieve a sleeving cooperation with the steam line 6. This design helps increase the stability and reliability of the connection between the steam passage 5 and the steam line 6, reduce the possibility that the steam passage 5 and the steam line 6 detach from each other, and enable steam to stably enter the steam line 6 via the steam passage 5, thus facilitating the discharge of steam.

As shown in Figs. 3 and 4, in a possible mode of realization, the top lid 2 is provided with a connector 25, an end of which is connected to the steam line 6, and the other end of which is connected to the steam passage 5.

The two ends of the connector 25 can cooperate respectively with the steam line 6 and the steam passage 5. In the connector 25, an end of the steam line 6 can be sleeved with an end of the steam passage 5, thereby achieving the communication between the steam line 6 and the steam passage 5. Alternatively, an end of the steam line 6 does not come into direct contact with an end of the steam passage 5. Steam, after being discharged out of the steam passage 5, can first enter the connector 25, and then enter the steam line 6 via the connector 25, thereby achieving the communication between the steam line 6 and the steam passage 5.

Providing the connector 25 helps increase the stability and reliability of the connection between the steam line 6 and the steam passage 5, while helping improve the sealing between the steam line 6 and the steam passage 5 and reduce the possibility that steam spills out from the connection between the steam line 6 and the steam passage 5, thus helping improve the utilization safety of the liquid heating container.

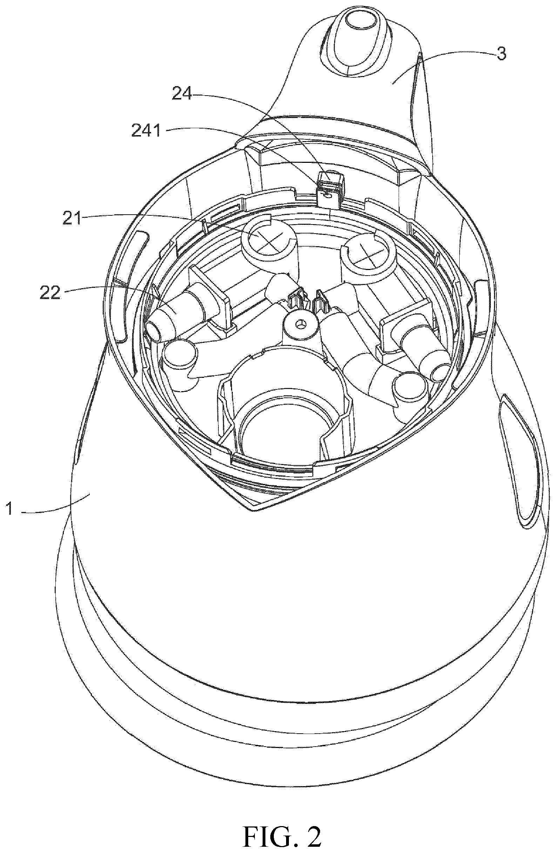

As shown in Figs. 2 and 4, in a possible mode of realization, the top lid 2 is provided with an air inlet 21 and an air guiding line 22. The air inlet 21 is in communication with the liquid holding chamber 11. The top lid 2 is formed with a first chamber 23 in communication with the steam chamber 11. An end of the air guiding line 22 is in communication with the air inlet 21, and the other end is in communication with the first chamber 23.

The air guiding line 22 provides a circulation passage for steam that has entered into the top lid 2. That is to say, the air guiding line 22 can guide steam so that steam that has entered via the air inlet 21 can flow towards the first chamber 23 via the air guiding line 22, and steam that has flown into the first chamber 23 can then flow into the steam chamber 41 and thus can trigger the steam switch 4 to power off the liquid heating container.

By providing the air guiding line 22, steam entering via the air inlet 21 can be guided so as to enable steam to flow towards the first chamber 23 from the air inlet 21 and thereby enable steam to smoothly enter the steam chamber 41 to trigger the steam switch 4 to achieve the powering off of the liquid heating container, thus helping improve the utilization safety of the liquid heating container.

As shown in Figs. 2 and 4, in a possible mode of realization, the top lid is provided with at least two air inlets 21 and at least two air guiding lines 22. The air inlets 21 are in communication with the corresponding air guiding lines 22.

The number of the air guiding lines 22 can correspond to the number of the air inlets 21. Specifically, the air guiding lines 22 can be two in number and arranged respectively at two sides of the top lid 2. The air guiding lines 22 can communicate with corresponding air inlets 21.

This arrangement helps increase the flow of steam, enables steam produced in the container body 1 to rapidly flow towards the steam chamber 41 so as to trigger the steam switch 4, and thereby helping shorten the time needed to trigger the steam switch 4, which in turn helps improve the utilization safety of the liquid heating container. Moreover, this arrangement also reduces the possibility of a large quantity of steam accumulating in the liquid holding chamber 11, which in turn helps reduce the possibility that steam poses a safety hazard for the liquid heating container.

As shown in Figs. 1 to 4, in a possible mode of realization, the top lid 2 is further provided with a communicating member 24. The communicating member 24 is provided with a communication passage 241, an end of which is in communication with the steam chamber 41, and the other end of which is in communication with the first chamber 23.

Steam in the liquid holding chamber 11, after entering the first chamber 23 via the air guiding line 22, can then enter the steam chamber 41 via the communication passage 241. Specifically, the communication member 24 can be sleeved to the steam passage 5, and the communication passage 241 can extend in the radial direction of the top lid 2.

By providing the communicating member 24, a passage is provided for steam to flow from the first chamber 23 to the steam chamber 41, thereby helping achieve the flowing of steam towards the steam chamber 41 and reduce the possibility of steam accumulating in the first chamber 23, which facilitates the triggering of the steam switch 4 by steam and in turn helps improve the utilization safety of the liquid heating container.

As shown in Fig. 3, in a possible mode of realization, the communication passage 241 is located at the side of the steam passage 5 of the steam chamber 41 away from the steam line 6 in the direction of the height of the container body 1.

The communication passage 241 is located above the steam passage 5. Steam, after entering the steam chamber 41 via the communication passage 241, can then flow towards the steam line 6 via the steam passage 5. This arrangement helps reduce the possibility of steam in the steam chamber 41 flowing back to the communication passage 241 and enable the steam in the steam chamber 41 to smoothly flow into the steam line 6, and thereby helping steam be discharged from the liquid heating container, which in turn helps improve the utilization safety of the liquid heating container.

As shown in Figs. 1 and 3, in a possible mode of realization, the liquid heating container further comprises a bottom lid 7 located at the side of the container body 1 away from the top lid 2. The bottom lid 7 is formed with a second chamber 71. The steam line 6 is capable of extending into the second chamber 71. The bottom lid 7 is provided with an air outlet (not shown in the figures) in communication with the second chamber 71.

The top lid 2 is arranged at one side of the container body 1 while the bottom lid 7 is arranged at the other side. Specifically, the liquid heating container can further comprise a base 8. The bottom lid 7 can be connected to the base 8. The steam line 6 can extend into the second chamber 71. The second chamber 71 can be provided with an air outlet at its bottom. Steam in the steam line 6 can be discharged via the air outlet. Specifically, the container body 1 can be further provided with a heating member 12 located in the liquid holding chamber 11 of the container body 11. The steam line 6 can be fixedly connected to the heating member 12 and can pass through the heating member 12 to extend to the second chamber 71.

This arrangement helps enable steam to be discharged from the liquid heating container via the air outlet and reduce the possibility of steam accumulating in the second chamber 71, thereby helping improve the utilization safety of the liquid heating container.

Embodiments of the present application provides a liquid heating container, comprising a container body 1, a top lid 2, a handle 3, and a steam line 6, the container body 1 being formed with a liquid holding chamber 11, the top lid 2 capable of covering the container body 1, the handle 3 being connected to the container body 1 and the top lid 2, an end of the steam line 6 being capable of extending to the bottom of the container body 1 and used for communicating with the exterior to discharge steam, wherein an end of the handle 3 close to the top lid 2 is provided with a steam switch 4 comprising a steam chamber 41 in communication with the liquid holding chamber 11 and used for triggering the steam switch 4, the other end of the steam line 6 being in communication with the steam chamber 41. This design helps reduce the temperature of steam when it is discharged, thereby reducing the possibility that a user is scalded by the steam, which improves the utilization safety of the liquid heating container.

## Claims

1. A liquid heating container **characterized in that** it comprises:
a container body (1) formed with a liquid holding chamber (11);
a top lid (2) capable of covering the container body (1);
a handle (3) connected to the container body (1) and the top lid (2);
a steam line (6), an end of which is capable of extending to a bottom of the container body (1) and used for communicating with an exterior to discharge steam;
wherein an end of the handle (3) close to the top lid (2) is provided with a steam switch (4) comprising a steam chamber (41) in communication with the liquid holding chamber (11) and used for triggering the steam switch (4), the other end of the steam line (6) being in communication with the steam chamber (41).

2. The liquid heating container of claim 1, wherein the steam line (6) is connected to a bottom wall of the steam chamber (41) and extends in a direction of height of the liquid heating container.

3. The liquid heating container of claim 1, wherein a side wall of the steam chamber (41) is provided with a steam passage (5) comprising a first passage (51) and a second passage (52), an end of the first passage (51) being in communication with the steam chamber (41) while the other end is in communication with the second passage (52), the second passage (52) being used for communicating with the steam line (6), and an angle existing between the first passage (51) and the second passage (52).

4. The liquid heating container of claim 3, wherein the steam line (6) is sleeved with the steam passage (5).

5. The liquid heating container of claim 3 or 4, wherein the top lid (2) is provided with a connector (25), an end of which is connected to the steam line (6), and the other end of which is connected to the steam passage (5).

6. The liquid heating container of any one of claims 1 to 5, wherein the top lid (2) is provided with an air inlet (21) and an air guiding line (22), the air inlet (21) being in communication with the liquid holding chamber (11), the top lid (2) being formed with a first chamber (23) in communication with the steam chamber (41), an end of the air guiding line (22) being in communication with the air inlet (21), and the other end being in communication with the first chamber (23).

7. The liquid heating container of claim 6, wherein the top lid is provided with at least two air inlets (21) and at least two air guiding lines (22), the air inlets (21) being in communication with the corresponding air guiding lines (22).

8. The liquid heating container of claim 6 or 7, wherein the top lid (2) is further provided with a communicating member (24), the communicating member (24) being provided with a communication passage (241), an end of which is in communication with the steam chamber (41), and the other end of which is in communication with the first chamber (23).

9. The liquid heating container of claim 8, wherein the communication passage (241) is located at a side of the steam passage (5) of the steam chamber (41) away from the steam line (6) in a direction of height of the container body (1).

10. The liquid heating container of any one of claims 1 to 9, further comprising a bottom lid (7) located at a side of the container body (1) away from the top lid (2), the bottom lid (7) being formed with a second chamber (71) into which the steam line (6) is capable of extending, the bottom lid (7) being provided with an air outlet in communication with the second chamber (71).

11. The liquid heating container of any one of claims 1 to 10, wherein the steam line (6) is arranged inside the container body (1).
